# EUROPEAN PATENT APPLICATION

(11) **EP 1 705 860 A1**
(43) Date of publication of application: **27.09.2006**
(21) Application number: 05447064.6
(22) Date of filing: 25.03.2005
(51) Int. Cl.: H04L 29/06, H04N 1/00

(54) **Method and system for producing and sending personalized pictures**

(71) Applicant: van Caneghem, Jan, 9000 Gent (BE)
(72) Inventor: van Caneghem, Jan, 9000 Gent (BE)
(74) Representative: Brants, Johan P.E.

(57) **Abstract**

The present invention relates to a method and a system for producing and sending of one or more personalized pictures, preferably photographs or (postal) cards. The present method can be carried out once or frequently, for example at particular moments in time. In a particular embodiment the method and the system provide the possibility to couple one or more marketing and/or advertising messages to one or more of the personalized pictures.

## Description

### Technical field

The present invention is related to the technical field of communication and service. In a first aspect the invention provides a method for producing and sending one or more personalized pictures. In a second aspect the present invention provides a system for producing and sending one or more personalized pictures, for example photos or (postal) cards or the like.

### Background of the invention

In general at occasions like for example anniversaries, wedding anniversaries, weddings, births, invitations to receptions, (theater)performances, or the like, media such as cards, postal cards, posters, postograms, telegrams, etc... are sent. Usually media are selected with preprinted images. An individual has no means to create his own desired picture or to select what must be placed on media. Thus the media with the preprinted images cannot be so personal, or adequately represent what an individual wishes to show to its family, friends, colleagues, etc.

Moreover an individual must have the necessary postal tools (postage stamps, envelopes, etc...) for sending media and he must send the media by means of deposition in a mail box or mail office. Therefore the individual must himself go to a mail office on set times. Disadvantage is that mail offices mostly do not have flexible opening hours, as a result of which it is for individuals sometimes difficult to attain the necessary postal tools, and to be able to send the media swiftly.

In view of the above it is clear that there is a need in the art to create media according to the personal taste and desire of an individual.

There is also a need for achieving a system where an individual in a simple and fast manner can send (personal) media without having to go to a mail office or mail box.

The present invention aims to provide a suitable solution for this.

More specific it is an aim of the present invention to provide a simplified and fast method, suitable for producing and sending personalized pictures.

### Summary

For that purpose the invention provides in a first aspect a method for producing and sending one or more personalized pictures by a user which comprises the steps of:
a) registering of a user,
b) uploading or selecting one or more pictures by the user;
c) introducing one or more personalized messages on the pictures from step b) in order to obtain one or more personalized pictures;
d) selecting the desired sending data;
e) coupling the one or more personalized pictures to the corresponding one or more sending data;
f) paying for sending the one or more personalized pictures;
g) processing of the payment from step f);
h) and sending the one or more personalized pictures.

The pictures include by preference photographs, (postal) cards, posters, stickers, labels, or the like. These pictures can be made and supplied by a user himself. Thus, for example, digital photographs (for example of its holiday destination) can be uploaded by a user from a digital camera or mobile phone. In another embodiment the said pictures can be selected from a wide assortment of available (topic) pictures.

According to the present method the user must at the same time select the sending data in a next step. These sending data include, for example but are not limited to, name, destination addresses like for example postal and/or e-mail address(es) of one or more contacts, sending data, occasion for the sending, etc..

In a preferred embodiment the present method provides a further step of:
- confirming a user the sending of the one or more personalized pictures; and/or
- confirming a user the receipt of the one or more personalized pictures by one or more selected destination addresses.

In an embodiment the method provides in the electronic sending of one or more personalized pictures. The personalized pictures can thus be sent electronically to a recipient by means of several canals, which for example can include a PDA, TV, camera, mobile phone or the like. In another embodiment the method provides in the manual (physical) sending of one or more personalized pictures. In both cases the method according to the present invention offers the important advantage that a user no longer must go to a mail office to buy himself the necessary postal tools and to be able to send the personalized picture on time. Moreover sending the personalized pictures this way goes faster and more efficiently.

In another embodiment the method includes the step of printing at least one personalized picture produced by a user. In this way a personalized picture, produced by a user, can also be printed at least once, preferably by means of digital printing technology, which therefore enables the user to produce and send entirely personal at least one personalized picture (for example a postal card).

In another embodiment the present invention provides in a method, in which the one or more personalized pictures are sent at the same time and/or repetitively. The present method provides thus in the possibility to send personalized pictures at the same time to a large group of recipients. Moreover the present invention provides also in the possibility of repeating the method at set times, like for example at returning anniversaries, wedding anniversaries, invitations for receptions, performances, and the like.

In an embodiment the invention provides a method in which the payment for the sending order takes place at the moment of production and sending of the one or more personalized pictures. Such payment can take place for example by means of a credit card. In another embodiment the invention provides a method in which the payment takes place by means of debiting of an account of the user, which preferably is replenished in advance and/or at appropriate times.

In another embodiment the invention provides a method whereby the sending data are produced, saved and managed by means of a central server. These data are preferably produced and saved per user, and at appropriate times completed and/or adapted. In a preferred embodiment the sending data are produced, saved and managed by the user himself.

In a next step the present method provides also in requesting at appropriate times confirmation of the user to repeat the method according to the steps from b) to f). Thus, according to the present method the user is notified when a certain date or occasion approaches. In a preferred embodiment the method includes an additional step in which the user confirms his agreement to repeat the method according to the steps from b) to f).

In yet another embodiment the invention provides a method in which a publicity message and/or code is provided on the one or more personalized pictures. Thus, the present method offers the possibility to adjust certain publicity - and/or marketing campaigns to certain occasions and/or groups of users and/or groups of recipients.

In another aspect, the invention provides a personalized picture which is obtained according to the method according to the present invention.

In yet another aspect the invention provides in a system for producing and sending one or more personalized pictures. The system comprises preferably:
- a picture unit which is suitable to produce, save and manage pictures;
- a central server which is suitable to register users and to produce, save and manage sending data;
- a payment unit which is suitable to register and process a payment order; and
- a communication unit, which is suitable to receive and forward messages to one or several users and/or recipients.
   The system can optionally also include a printing unit which is suitable to print a produced personalized picture.
   The system can optionally also further include an order unit which is suitable to produce, save and manage orders.
   The present invention is further illustrated below.

### Description of the figures

Figure 1 represents a flow diagram of a method according to the present invention.

Figure 2 is a schematic representation of an embodiment of a system according to the present invention.

Figure 3 represents some embodiments of a personalized picture that can be produced and sent according to the present method. On the different embodiments publicity messages and the like, as well as unique codes, both on the front and/or back of the personalized pictures, can possibly be introduced.

### Detailed description of the invention

In its broadest sense the present invention discloses a system and procedure for transferring a message by means of a central server where the user, if desired, can manage the data of recipients as well as the messages himself in a personal database. To this end a procedure/system which exists of a portal, coupled to a date management system and provided with several output possibilities, is established. This system or this procedure is referred to as "Pixamas" in the further description.

The input of a specific message, i.e. a personalized picture with text and picture, can be done with several devices suited for that or devices which will be suited for that in the future, like for example, but not limited to, digital cameras coupled to a PC or laptop, digital cameras provided with telephone or network access, PDA's, mobile phones, television sets or other devices which can be linked by means of a network with a central server.

Also the user will find theme pictures at Pixamas, which he can use to send an anniversary card for example.

The user can store all sending data of contacts in a personal database. In this way he can stipulate who must receive a message and when. The user will stipulate to this end the dates and be informed preferably by Pixamas when he must forward a message or when Pixamas will forward a message automatically. The sending data which the user enters to this end are for example anniversaries, wedding anniversaries, and others.

Next to this, the user can use these data (address data, personal interests and others) of the contact to forward messages.

The user can stipulate that Pixamas must inform him or her when certain dates approach. The user can also request to inform him/her of the actual sending of the message, or if everything happens electronically (when no physical postal card is sent) also of the arrival and good receipt of the message.

This message to confirm sending and/or reception of the personalized pictures can be sent by means of several canals such as mobile phone, PDA, TV, camera, and/or others.

The user can carry out a payment when he wants to forward a message. But he can also buy a number of credits with which all messages he wants to send in the course of the year have been or are paid.

When the user has produced a message and its solvency or payment has been checked, this message will be sent. This can be done in several manners.

The message is printed with both picture, text message and address data of the recipient, and is sent by Pixamas.

The message is electronically forwarded to the recipient, for example by means of mobile phone, PDA, TV, camera, and/or others.

With a unique code both the sender and the recipient of a personalized card can win a present by means of a given website. This present can be for example part of a co-branding campaign where for instance a bicycle manufacturer will couple its mark reputation to those of a fitness center. In this way the bicycle manufacturer can present its new bicycles very target and customer oriented.

With a unique code both the sender and the recipient of a personalized card can win a present by means of a given website. The sender and recipient can themselves choose from a number of presents as a result of which they themselves announce their preference and as a result of which co-branding partners get qualitative e-mail addresses.

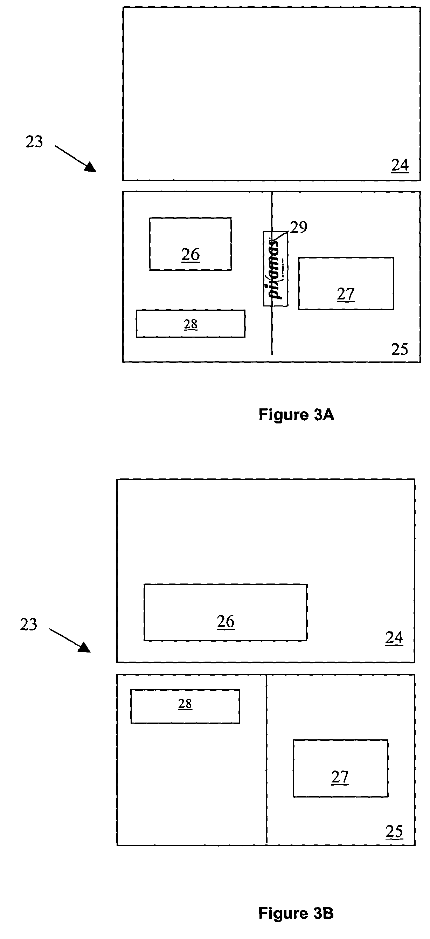

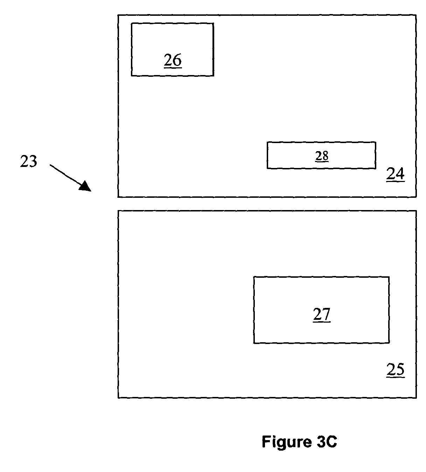

A user can plan tailored marketing or publicity actions by segmenting target groups of contacts. In function of age, gender, place of residence and other specific personal variables the user can vary for example the following: the image on the front, the message on the front, the message on the back, the present on the back etc. Examples of embodiments of personalized pictures according to the present invention are presented in figure 3.

Below an example of an embodiment of a system according to the present invention is described.

The Pixamas system runs preferably on a dedicated server due to the high data transfer. The system is available in several languages. There are preferably few texts on the site present, as a result of which one can incorporate these easily in a database with users and sending data. The system includes preferably a site which exists of several parts among which
- an administrative part: this is the part where partners and their sites are produced,
- a partner site: this is the part where the partner can log in to examine statistics, reports and commissions, and
- a front site: which is available is for the user(s) of the partner site.

Partners are preferably persons and/or companies which use the Pixamas system on their site. Partners can place the system online on their site, preferably in a frame. Partners get a login and password on the administrative part of Pixamas. There they can examine statistics and reports, adjust their campaign and consult the commission. Per partner one can enter a separate pricing policy.

The present system meets preferably the below-mentioned properties:
- Photograph upload, sending to addresses: The user is able to upload and send its own photograph to its own addresses.
- Photograph upload, sending to fixed address: The user is able to upload its own photograph, but sending goes to a fixed address.
- Choose card online, sending to addresses: The user can choose online from one or more cards and send these to its addresses.
- Choose card online, sending to fixed address: The user can choose online from one or more cards and send these to a fixed address.

In another embodiment a partner can pass on dependent on a certain target group (age, gender, period...) a certain message. Thus he can activate a reward system and/or adapt the image of a card. The partner is able to activate several campaigns, besides a standard (default) campaign. The default campaign must always be active in case a user does not meet the target group. The partner can in this way better influence a target group depending on age, gender... and possibly place it in a certain period. A partner can together or separately steer two parts in a campaign: for example the picture (front) or the reward program (present).

A partner can start up an indefinite number of campaigns.

If a partner produces a campaign he can determine by means of selections (age, gender, language...) which image must come on a card.

The reward program has as an aim of luring recipients back to the site of the partner. This is achieved by placing on the back of a sent card a unique code and by inviting the recipient to look online if he has won a present with this code. The name of the present is foreseen on the back of the card, as well as the "url" of the partner and the unique code.

For processing of orders preferably following steps are followed. Orders which are final and have been paid, enter into an order table. Because of this each order gets a separate unique number. In this table all necessary data for the processing of the order are present, f.i. the unique number, PortalAccountlD (sender), recipient data (name and address), PartnerlD (for link with partner), file name of the photograph, date of sending, etc...

In a next step a "csv file" is made online, which contains all necessary data for the processing of the orders. All photographs are also downloaded. Hereafter the downloaded photographs are converted, for example by means of Hotfolder.

The personalized photographs are printed. After the printing process, the downloaded csv is uploaded again in the system in order to register that these orders have been processed. Not processed orders (e.g. print errors) are first looked up manually in the csv and are removed from this. Users receive a report that their cards are printed and sent.

The above discussed front site of the system includes preferably following items.

Visitors (users) of the partner site get the possibility of composing online a personalized card. Users are also able to send a postal card without account. On the other hand users who produce an account can optionally profit from the advantages of the system and possibly use a reduced tariff, depending on choice of the partner.

Payments are processed online. Users can pay online after the production of a transfer, for example by means of visa/credit card. Users who have an account get an extra possibility: these users can buy credits before one carries out a transfer. These are preferably fixed amounts going from 5, 10, 15, 20, 30, 40, up to 50 euro.

Users who wish to register have to fill out following fields:
o name and first name
o street, no., box, zip code, city and country
o date of birth
o e-mail address
o desired login name and password

The partner is always coupled to the user (login). In this way the partner knows how many registrations there are and the system can also find out how many tickets have been sent.

For registered users preferably the following system characteristics are foreseen. The user can produce an indefinite number of lists of addresses. At the production of a list he gives the name of the list. Per item in the list of addresses following fields must be filled out such as name and first name, street, no., box, zip code, city and country, birth date, etc... The user can edit existing lists, remove addresses and remove the complete list.

The user can produce an anniversary list. This list contains addresses with birth dates. Produced personalized cards are sent automatically 1 to 2 days before a related anniversary. The user can in advance enter a message and photograph per anniversary.

Preferably some days before sending, a control is carried out on the solvency of the user. If this is not okay, the user gets an e-mail with the invitation to replenish its credits. If there is no credit available at sending, the sending does not take place and the item gets in the anniversary list a flag of 'not sent, not enough credits'. The anniversary table includes preferably the following fields: birthdaylistlD, portalaccountlD, DateCreation, Firstname, Lastname, Street, Number, Pobox, Zip, City, Country, Birthday.

The user has also access to a credit unit. In this part the user can buy credits and examine the history of its operations, for example in an account extract style.

The user has also access to and can consult a general FAQ ("Frequently asked question") list. Here one can find the most frequent questions concerning the system and the use of it.

Users obtain also a contact form. The entered questions arrive at a support address of Pixamas. Therefore, the partner must not spend time in answering questions. Following fields must be filled out: Name, first name, e-mail address, Dropdown with type of question, Message box. The user can update its own data at all times.

The system provides further a unit that is suitable to send messages to users. The messages to users use preferably a predefined HTML template in the layout of the partner. This template is uploaded at the production of a partner in the system.

When a user is registered he gets a confirmation message (mail). This mail contains its general data and also its login and password for the system.

The user, with or without an account, gets a message after the production of its cards, that these are well received. There is also a report of the payment (visa or credits).

When a user successfully has replenished its credits by means of the online payment system, he gets a report that these are recharged successfully with indication of amount and date.

Producing of a sending takes preferably place as follows.
Step 1: choice of card/upload of photograph: Depending on the setup of the system a user can make here a choice of a card or picture, or perform an upload of a maximum number of photographs.
Step 2: choice of address list/production of addresses: If the user has produced lists in advance, he can choose here a list. If there are no lists present, he can enter here addresses.
Step 3: coupling of photograph - message - address: Per recipient the user can specify which photograph and which message must be coupled. There is also the possibility of copying one message to all recipients.
Step 4: confirmation & payment: After coupling the user gets a confirmation. Here he can see the number of sendings and the total amount. On this page he gets also the choice to pay by means of credits (if present) and visa.
Step 5: processing of payment
Step 6: processing card: If the payment is in order, the user sees a confirmation page informing him that all has passed successfully. The cards are placed in the orders to be processed and receive a unique number. If the payment is not okay, the user is notified of this.

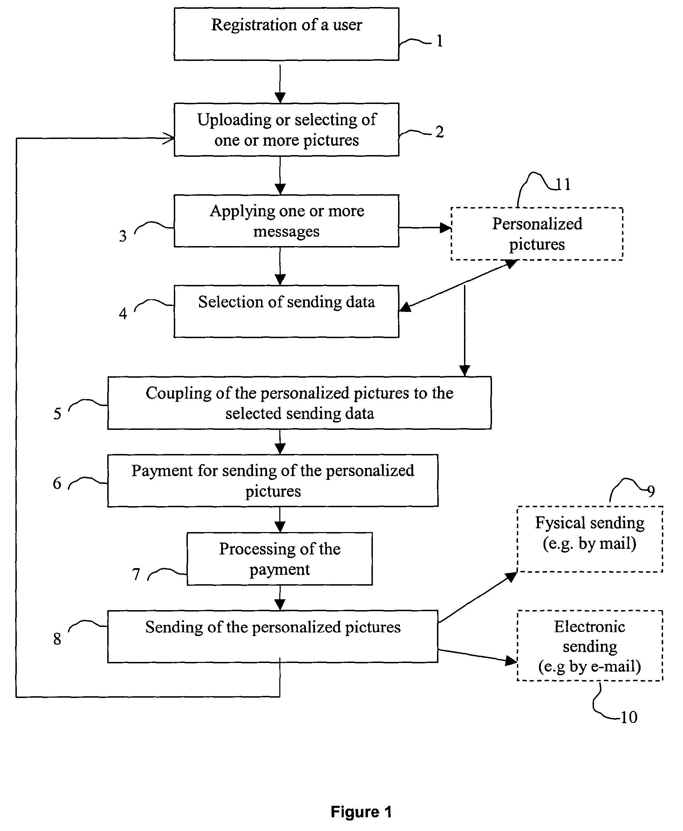

In **figure 1** a flow diagram of a method according to the invention is presented. The method includes in a first step the registration of a user as represented in block 1. Once registered the user obtains access to a site on which he can select in a next step, indicated in block 2, one or more pictures (for example photograph or postal cards). By registering in block 1 the user gets also the possibility to make a personal file in which he can store and manage personal sending details, for example names, addresses, sending times, important data etc. In a next step, indicated on block 3 the user can introduce on the pictures selected by him one or more personalized messages, thus obtaining one or more personalized pictures in block 11. The user chooses further in block 4 the desired sending data. At a next stage, presented by block 5, the one or more personalized pictures produced by the user are coupled to the one or more sending data. Block 6 further presents the payment for the sending orders, whereby payment can be done by credit card or by debiting the desired amount from an account produced in advance by the user. After processing of the payment in block 7, the one or more personalized pictures are sent in block 8, whereby this sending can be done physically, as represented in block 9, or electronically, as represented in block 10.

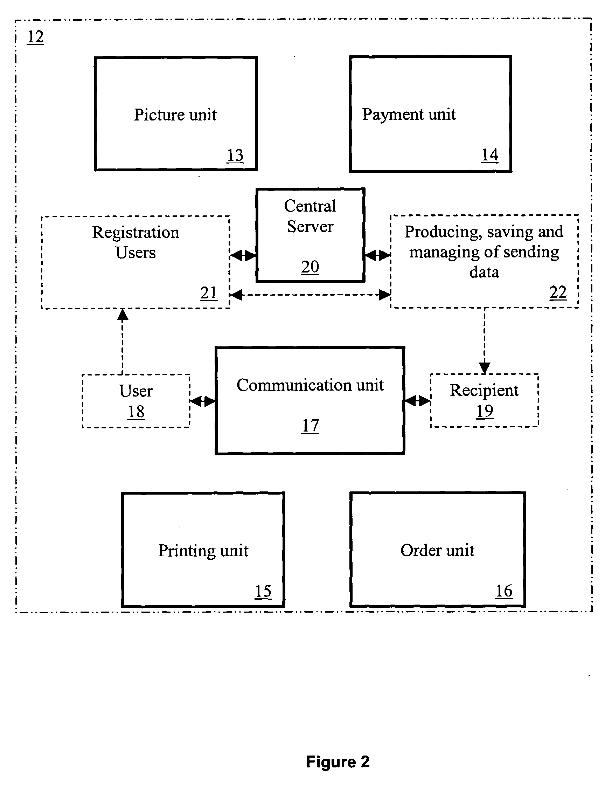

**Figure 2** represents an embodiment of a system for producing and sending one or more personalized pictures. The presented system 12 includes a picture unit presented in block 13 which is suitable to produce, save and manage pictures; a payment unit presented in block 14 that is suitable to register and process a payment order; a printing unit presented in block 15 that is suitable for printing a produced personalized picture, and an order unit presented in block 16 that is suitable to produce, save and manage orders. The system includes also a communication unit presented in block 17 that is suitable to receive and forward messages to one or more users presented in block 18 and/or recipients presented in block 19. The system comprises further a central server 20 which is suitable to register users as presented in block 21, whereupon they get access to a personal database as presented in block 22, in which the user can produce, save and manage sending data. The central server is further capable of guiding and controlling the remaining entities of the system (see systems 15, 16, 13, 14, 17).
**Figure 3** illustrates some embodiments of a personalized postal card 23 which can be produced and sent according to the present method. In the embodiment of figure 3A on the front 24 of the personalized postal card a holiday (travel) photograph is applied. On the back 25 of the photograph a message 26 is applied, address data 27 of the contact, and a publicity message 28, the latter containing a present name, a code and a "url" address. The mail card can also be foreseen on the back of a logo 29 or the like.
In **figure 3B** on the front 24 of the personalized postal card a photograph and a message 26 are applied. On the back 25 of the photograph the address data 27 of the contact, and a publicity message 28, are applied.
In **figure 3C** on the front 24 of the personalized postal card a photograph, a personal message 26, and a publicity message 28 are applied. On the back 25 of the photograph the address data 27 of the contact are noted.

## Claims

1. Method for producing and sending one or more personalized pictures by a user which comprises the steps of,
a) registering of a user,
b) uploading or selecting one or more pictures by the user;
c) introducing one or more personalized messages on the pictures from step b) in order to obtain one or more personalized pictures;
d) selecting desired sending data;
e) coupling the one or more personalized pictures to the corresponding one or more sending data;
f) paying for sending the one or more personalized pictures;
g) processing of the payment from step f); and
h) sending the one or more personalized pictures.

2. Method according to claim 1, further comprising the step of
- confirming the user the sending of the one or more personalized pictures; and/or
- confirming the user the receipt of the one or more personalized pictures by one or more desired destination addresses.

3. Method according to claim 1 or 2, in which the one or more personalized pictures are sent electronically.

4. Method according to claim 1 or 2, in which the one or more personalized pictures are sent manually.

5. Method according to any one of the preceding claims 1 to 4, in which the one or more personalized pictures are sent at the same time or repetitively.

6. Method according to any one of the preceding claims 1 to 5, in which the payment takes place at the moment of production and sending of the one or more personalized pictures.

7. Method according to any one of the preceding claims 1 to 5, in which the payment is made by debiting the account of the user.

8. Method according to any one of the preceding claims 1 to 7, in which the sending data are produced, saved and managed by means of a central server.

9. Method according to any one of the preceding claims 1 to 7, in which the sending data are produced, saved and managed by the user.

10. Method according to any of the preceding claims 1 to 9, in which at appropriate times a confirmation is requested from the user to repeat the method according to the steps from b) to f).

11. Method according to any one of the preceding claims 1 to 10, in which the picture comprises a photograph, postal card, poster, sticker, label, or the like.

12. Method according to any one of the preceding claims 1 to 11, in which the sending data comprise name, postal and/or e-mail address of one or more contacts, sending dates, occasion for the sending, or the like.

13. Method according to any one of the preceding claims 1 to 12, further comprising the step of providing a publicity message and/or code on the one or more personalized pictures.

14. Personalized picture obtained according to the method according to any one of the preceding claims 1 to 13.

15. System for producing and sending of one of more personalized pictures comprising:
- a picture unit which is suitable to produce, save and manage pictures;
- a central server which is suitable to register users and to produce, save and manage sending data;
- a payment unit which is suitable to register and process a payment order; en
- a communication unit which is suitable to receive and forward messages to one or more users and/or recipients.
